# EUROPEAN PATENT APPLICATION

(11) **EP 1 580 442 A2**
(43) Date of publication of application: **28.09.2005**
(21) Application number: 05101292.0
(22) Date of filing: 21.02.2005
(51) Int. Cl.: F16B 5/06, F16B 2/24

(54) **Angled fastener clip and method of manufacturing same**

(30) Priority: 26.03.2004 SE 4007985
(71) Applicant: Scania CV AB (publ), 151 87 Södertälje (SE)
(72) Inventor: Hjerpe, Joakim, 792 94, Mora (SE); Larsson, Mikael, 151 46, Södertälje (SE); Israelsson, Peter, 113 62, Stockholm (SE)
(74) Representative: Sjögren, Stina

(57) **Abstract**

The present invention provides a fastener (100) formed from sheet material for securely joining two articles together. The fastener comprises: a first clip portion (10) comprising at least a pair of opposed first jaw members (11, 11') adapted to receive and retain part of a first article there-between; and a second clip portion (20) comprising at least a pair of opposed second jaw members (21, 21') adapted to receive and retain part of a second article there-between. The second jaw members (21, 21') are integral with and extend outwardly from one of the first jaw members (11') such that the first clip portion (10) and the second clip portion (20) are disposed at an angle to one another. Preferably, the second jaw members (21, 21') extend outwardly from a distal or end region (14) of said one of the first jaw members (11'). Typically also, the second jaw members (21, 21') are laterally offset from one another. The invention furthermore concerns a method of manufacturing such a fastener.

## Description

### Technical field

The present invention relates to the field of fasteners and clips for securing articles together. In particular, the present invention concerns a fastener for securely connecting two articles, as well as to a method of manufacturing such a fastener.

The present invention has particular application to fasteners and clips designed to connect vehicle components in the automotive industry, which components have a substantially flat or planar connecting part. Although it will be convenient to hereafter describe the invention in this exemplary context, it should be appreciated that the present invention is not limited to this particular application. Rather, the invention may be suitable for articles having a variety of geometries, and may also be employed in a range of different industries.

### Background art

As will be appreciated, the prior art is replete with examples of fasteners and clips for securely coupling articles or components having substantially flat or planar connecting parts. One such example is shown in British patent specification GB 2,211,906, which describes an extruded section, typically of aluminium, for interconnecting two panel members substantially at right angles.

Another example is shown in United States patent no. 4,296,524, which describes a plastic extruded joining member for joining structural elements having plane connecting portions.

United States patent no. 5,209,597 describes a fastener designed for securing a lid panel on a case for agricultural produce. In that instance, the fastener is typically formed as an integral moulding.

German patent document DE 38 22 463 describes yet another version of a fastening clip for securing automobile components such as cables, hydraulic lines and cladding elements.

The present invention is aimed at the development of an improved, purpose oriented clip-type fastener for securely connecting two articles for the automotive industry. In particular, the present invention aims to provide a clip-type fastener that is suited to high volume and cost effective manufacture from sheet material, a fastener that is able to provide a reliable and essentially non-removable connection between the two articles, and a fastener that enables the two articles to be secured together at a specific angle to one another. The present invention also aims to provide a method of manufacturing such an improved fastener.

### Summary of the invention:

In view of the above aims, the present invention provides a fastener having the features as set out in claim 1. Furthermore, the present invention also provides a method of manufacturing a fastener as set out in claim 19.

According to one aspect, the present invention provides a fastener for securely connecting two articles together, the fastener comprising: a first clip portion comprising at least a pair of opposing first jaw members adapted to receive and retain part of a first article there-between; and a second clip portion comprising at least a pair of opposing second jaw members adapted to receive and retain part of a second article there-between. The second jaw members are integral with and extend outwardly from one of the first jaw members such that the first clip portion and the second clip portion are arranged at an angle to one another, and the second jaw members are laterally offset from one another.

In a preferred form of the invention, the second clip portion has at least three jaw members comprising a central jaw member and two lateral jaw members adapted to act in opposition to the central jaw member, with the two lateral jaw members being arranged offset from the central jaw member to laterally opposite sides thereof.

In a preferred form of the invention, the first jaw members are interconnected with each other at a base region thereof and extend to a distal region at which the first article may be inserted, the second jaw members are interconnected with each other at a base region thereof and extend to a distal region at which the second article may be inserted, and the second jaw members are integral with and extend outwardly from their respective base region at the distal region of said one of the first jaw members.

In a preferred form of the invention, the first clip portion and the second clip portion are arranged at an angle to one another greater than 0° and less than 180°, preferably in the range of about 30° to about 150°, more preferably in the range of about 60° to about 120°, and most preferably about 90°.

In a preferred form of the invention, the fastener is formed from an element of substantially rigid sheet material, such as sheet metal, e.g. by cutting and bending or pressing.

According to a related aspect, the present invention provides a fastener of the type described above for securely joining two articles together. The fastener is formed from sheet material and comprises: a first clip portion comprising at least a pair of opposed first jaw members adapted to receive and retain part of a first article there-between; and a second clip portion comprising at least a pair of opposed second jaw members adapted to receive and retain part of a second article there-between. The second jaw members are integral with and extend outwardly from one of the first jaw members such that the first clip portion and the second clip portion are arranged at an angle to one another.

In a preferred form of the invention, each of said first jaw members is interconnected with the other at a base region thereof and extends to a distal region at which the first article is inserted; each of said second jaw members is interconnected with the other at a base region thereof and extends to a distal region at which the second article is inserted; and the second jaw members are integral with and extend outwardly from their respective base regions at said one of the first jaw members.

In a preferred form of the invention, the second jaw members extend outwardly from the distal region of said one of the first jaw members.

According to another related aspect, the present invention provides a fastener of the type described above for securely connecting two articles together. The fastener comprises: a first clip portion having at least a pair of opposing first jaw members adapted to receive and retain part of a first article there-between, each of said pair of first jaw members being interconnected with the other at a base region thereof and extending to a distal or end region at which the first article is inserted; and a second clip portion comprising at least a pair of opposing second jaw members adapted to receive and retain part of a second article there-between, each of said pair of second jaw members being interconnected with the other at a base region thereof and extending to a distal or end region at which the second article is inserted. In this related aspect, the second jaw members are integral with and extend outwardly from their respective base regions at the distal end region of one of said first jaw members.

In a preferred form of the invention, the second jaw members are laterally offset from one another. The second clip portion preferably has at least three jaw members, said at least three jaw members comprising a central jaw member and two opposing lateral jaw members adapted to act in opposition to the central jaw member, said two lateral jaw members being arranged offset from the central jaw member to laterally opposite sides thereof.

In a preferred form of the invention, the opposing jaw members of each respective clip portion comprise elements of folded sheet material.

In a preferred form of the invention, the opposing jaw members of each respective clip portion are resiliently biased towards one another in such a way that insertion of the respective article requires the jaw members to resiliently yield away from one another.

In a preferred form of the invention, at least one of the first jaw members includes one or more projections for engaging a corresponding recess or aperture in that part of the first article received within the first clip portion. The projection(s) is/are adapted to inhibit or prevent removal of the first article from the first clip portion, and each projection is preferably in the form of a barb. Similarly, at least one of the second jaw members also preferably includes one or more such projection to inhibit or prevent removal of the second article from the second clip portion. The one or more projection is again designed to engage with a recess or aperture in the part of the second article received within the second clip portion.

In a preferred form of the invention, the parts of the first and second articles to be respectively received within the first and second clip portions are substantially planar. Indeed, either or both of the first and second articles may be substantially planar or plate-like, with the part received within the respective first and/or second clip portion being an edge region thereof.

In a preferred form of the invention, the distal region of at least one of the first and second jaw members includes an outwardly angled flap to assist insertion of the first or second article into the respective clip portion.

According to a further aspect, the present invention provides a method of manufacturing a fastener for connecting two articles, the method comprising the steps of:
folding an element of sheet material over upon itself to form a pair of opposed first jaw members which together comprise a first clip portion adapted to receive and retain part of a first article therein; and
cutting the element of sheet material at or adjacent one of the first jaw members to form at least two strip-like elements integral with and dependent from that jaw member; and
folding said at least two strip-like elements to form at least a pair of opposed second jaw members which together comprise a second clip portion adapted to receive and retain part of a second article therein, the second jaw members extending outwardly from said one of the first jaw members such that the first clip portion and the second clip portion are arranged at an angle to one another.

According to a related further aspect, the present invention provides a method of manufacturing a fastener for connecting two articles, the method comprising the steps of:
folding an element of sheet material over upon itself to form a pair of opposed first jaw members adapted to receive and retain part of a first article, such that said first jaw members are interconnected with each other at a base region thereof and extend to a distal or end region at which the first article may be inserted;
cutting said element of sheet material at the distal region of one of said first jaw members to form at least two strip-like elements integral with and dependent from that distal region; and
folding said at least two strip-like elements to form at least a pair of opposed second jaw members adapted to receive and retain part of a second article there-between, such that said second jaw members extend outwardly from the distal or end region of said one of the first jaw members at an angle to the first jaw members.

In a preferred form of the invention, the method comprises the step of folding the opposing jaw members of each respective clip portion such that they are resiliently biased towards one another and such that insertion of the respective article requires the jaw members to resiliently yield away from one another.

In a preferred form of the invention, the method includes the step of folding the sheet material at a distal region of at least one of the first and second jaw members outwardly or away from the opposing jaw member(s) to form an angled flap to assist insertion of the first or second article there-between.

In a preferred form of the invention, the method includes the step of forming (e.g. by cutting) one or more projections in at least one of the jaw members for engaging a corresponding recess or aperture in that part of the article respectively inserted to inhibit or prevent removal of that article from the respective clip portion. The step of forming this one or more projection typically includes cutting and folding of the sheet material.

In a preferred form of the invention, the sheet material is a sheet metal, such as sheet steel. The steps of folding and/or cutting the element of sheet metal preferably include a series of cold-working operations, one or more of which may take place in a press or forge. Importantly, it should be appreciated that the steps involving 'folding' of the sheet material may be understood as including or involving the creation of a permanent plastic deformation through bending of the sheet material.

It should be appreciated that all of the steps involving cutting of the element of sheet material may occur prior to the folding steps through the preparation of a fastener blank or pre-form. In this regard, a flat blank or pre-form element of sheet material may be cut from a larger stock sheet. Any appropriate cutting technique, such as stamping or die cutting, may be employed to prepare the blank. Thus, the blank is formed having a basic outline that incorporates all of the necessary features of the fastener - e.g. slots, strips, prongs, panels, apertures, windows etc. Thereafter, the fastener blank undergoes the various folding steps to place those features in their correct positions relative to one another, and to thereby complete the formation of the fastener.

In one embodiment, therefore, the invention provides a method of manufacturing a fastener for connecting two articles, the method comprising the steps of:
cutting a fastener blank from a sheet of stock material, the blank having a first panel portion and at least two second strip elements extending from one side of the first panel portion;
folding the first panel portion over upon itself to form a pair of opposed first jaw members adapted to receive and retain part of a first article there-between;
folding the said second strip elements, which depend from a distal or edge region of one of the first jaw members, outwardly and away from the first jaw members and such that said strip elements themselves form a pair of opposed second jaw members adapted to receive and retain part of a second article there-between.

The at least two second strip elements are typically laterally offset from one another, but are preferably relatively closely adjacent or side-by-side. In one embodiment, the blank includes three of the said second strip elements extending from one side of the first panel portion. These strip elements are then preferably folded to form three second jaw members - namely, a central second jaw member and two lateral second jaw members offset to laterally opposite sides of the central one. In that case, the lateral second jaw members are preferably designed to act in opposition to the central second jaw member.

### Brief Description of the Drawings:

A preferred embodiment of the present invention is hereafter described by way of example with reference to the accompanying drawings, in which like reference characters designate like features throughout the various views, and in which:
Fig. 1 is a perspective view of a fastener according to a preferred embodiment of the invention;
Fig. 2 is a front view of the fastener shown in Fig. 1; and
Fig. 3 is an end view of the fastener shown in Fig. 1, when viewed from the direction of arrow A in Fig. 2.

### Detailed description of the preferred embodiment:

The present invention concerns a clip-type fastener for securely connecting two components or articles together. The articles to be securely coupled in this case have substantially planar connecting parts for insertion into the fastener of the invention.

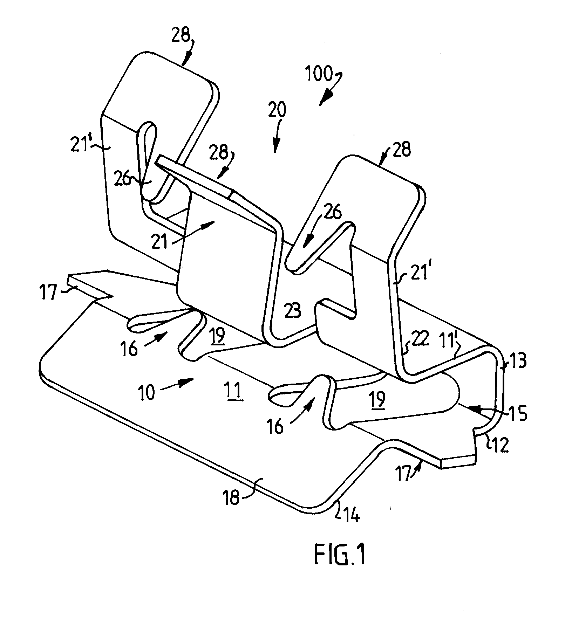

Referring now to drawing Figs. 1 to 3, the fastener 100 of the present invention is an integral component fabricated by folding and cutting a substantially rigid piece of sheet material, such as sheet steel. The fastener 100 incorporates two distinct clip portions, each of which is designed to receive and retain a connecting part of one of the two articles to be securely coupled together.

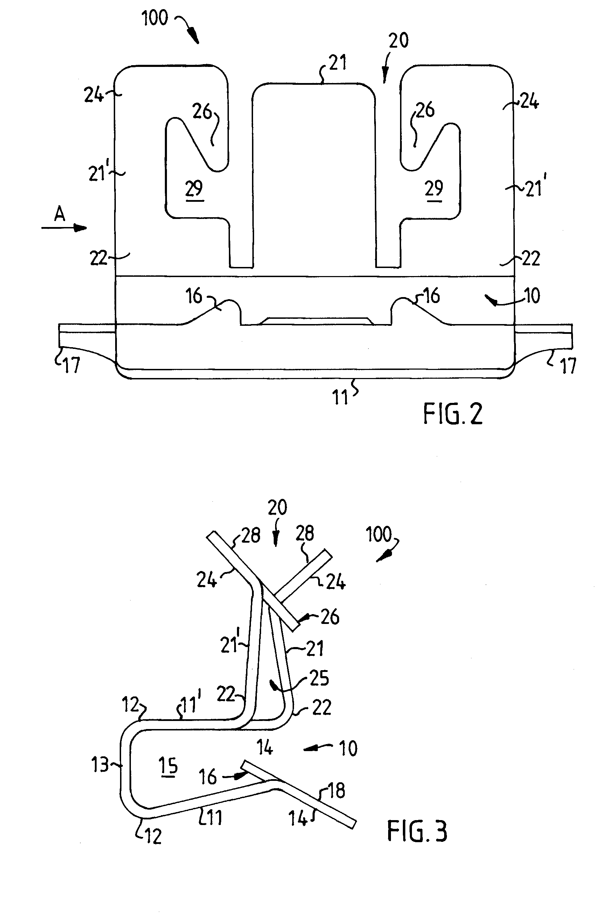

In particular, the fastener 100 includes a first clip portion 10 comprising a pair of opposed first jaw members 11, 11' which are adapted to receive and retain the planar connecting part (not shown) of a first one of the articles. The opposed jaw members 11, 11' are formed by folding the sheet material over upon itself such that base regions 12 of each of the first jaw members 11, 11' are interconnected by a web 13 of material where the folding occurs. The first jaw members 11, 11' extend from their respective base regions 12 to distal or end regions 14 and thereby define a recess 15 having a general U-shape (at least in end view, as shown in Fig. 3 for receiving and retaining the first article therein. Each of the first jaw members 11, 11' are folded such that they are angled towards one another, thereby creating a resilient bias which acts to grip or clamp upon the first article when it is inserted into the recess 15 between the first jaw members. In other words, insertion of the first article into the first clip portion 10 causes a resilient deformation of the first jaw members 11, 11' which in turn induces a clamping force on the first article held therein.

The fastener 100 also includes a second clip portion 20 comprising opposed second jaw members 21, 21'. These second jaw members 21, 21' are formed directly at one of the first jaw members 11'. In particular, the sheet material at the distal or end region 14 of one of the first jaw members 11' is cut to form three strip-like elements which are then folded to form the three second jaw members 21, 21' of the second clip portion 20. As is most clearly evident from Figs. 1 and 3, these three strip-like elements are folded or bent out of the plane of the first jaw member 11' from which they extend. In particular, they are folded or bent such that they extend outwardly from a base region 22 to an end or distal region 24 so that the second clip portion 20 is thereby oriented at an angle of approximately 90° to the first clip portion 10. This angle may be understood as either the angle between the directions for inserting the articles into the first and second clip portions 10, 20, or as the angular orientation between the parts of the first and second articles when they are securely held by the fastener 100.

As can be seen in Fig. 3 of the drawings, the second jaw members 21, 21' extend essentially directly from the distal or end region 14 of first jaw member 11'. That is, the base regions 22 of the second jaw members are located at the distal region 14 of that first jaw member 11'. The three second jaw members 21, 21' are all laterally offset from one another, and comprise a central second jaw member 21 in the form of a tongue-like element and two lateral second jaw members 21' which are designed to act in opposition to the central jaw member 21. The two lateral second jaw members 21' are arranged offset from the central jaw member 21 to each of the laterally opposite sides thereof.

The folding or bending of the three strip-like elements to form the second jaw members 21, 21' is such that a web 23 of sheet material extends between the base regions 22 of the central tongue-like jaw member 21 and the lateral jaw members 21'. This web 23 provides the second clip portion 20 with a generally U-shaped recess 25 - at least in the end view shown in Fig. 3 - for receiving the connecting part of the second article.

As can be clearly seen in Figs. 1 and 3, each of the lateral second jaw members 21' is provided with a projection 26 formed as a prong or barb, which is designed to engage a corresponding recess or aperture (not shown) formed in the connecting part of the second article when it is inserted between the jaw members 21, 21' of the second clip portion 20. These prongs or barbs 26 may resiliently flex to facilitate insertion of the second article into the clip portion 20 but they are designed to inhibit or prevent withdrawal of the second article once it is fully inserted. Similarly, one of the first jaw members 11 also includes two such prongs or barb-like projections 16 also designed to engage with corresponding recesses or apertures (not shown) formed in the connecting part of the first article when it is inserted into the first clip portion 10. These projections 16 may likewise resiliently flex to facilitate insertion of the first article, but are adapted to inhibit or prevent its withdrawal once fully inserted.

These projections 16, 26 may provide an indication to the user that the first and second articles are correctly or fully inserted into the respective clip portions 10, 20 by a 'clicking' sound generated as the resiliently flexed projections 16, 26 spring back upon entering the corresponding recesses in the first and second articles. If the recesses or apertures for receiving the projections 16, 26 are positioned or located asymmetrically or on one side only of the respective article's connecting part, then the projections may also serve to ensure that the fastener and the articles are in the correct orientation to one another - i.e. right side up. In the present case, the lateral flanges 17 projecting from the sides of one of the first jaw members 11 also provide this function.

To assist the passage of the first article into the first clip portion 10, one of the first jaw members 11 includes an outwardly folded flap 18 at its distal or end region 14. This flap 18 provides a ramp surface for guiding the connecting part of the article into the recess 15 of the first clip portion. Similarly, the distal or end regions 24 of the second jaw members 21, 21' are also folded outwardly or away from one another (best seen in Fig. 3) to also form flaps 28 providing ramp surfaces for guiding the connecting part of the second article as it is inserted between the second jaw members into the recess 25.

As can be seen in Fig. 1 and Fig. 2, the fastener 100 includes windows or cut-out sections 19, 29 which serve to reduce the weight of the fastener, and also enable variation or optimisation in the flexibility of the various clip portion jaw members 11, 11', 21, 21'.

The particular example of the fastener 100 illustrated in the drawings is designed for securely connecting a first plastic article and a second metal plate or panel. In this instance, furthermore, the fastener 100 is designed for a substantially non-removable connection between the plastic first article and the second metal plate.

The manufacture or fabrication of the fastener 100 typically commences with the formation of a flat fastener blank, by stamping or die cutting the desired starting shape from a sheet of stock steel material. In the current example, one must imagine the fastener shown in Fig. 1 laid flat to envisage how the blank would look. In this regard, the first clip portion 10 might be imagined as a first panel portion having lateral wedge-shaped flanges 17 and windows 19 with prongs 16. The second clip portion 20 could be imagined as three side-by-side second strip elements which extend from one side or edge region of the first panel portion. The two laterally outer strip elements would include the prongs 26 and the cut-outs 29.

Creation of the fastener 100 would then involve folding the first panel portion over upon itself to form the opposed first jaw members 11,11', including bending the prongs 16 out of the plane of the windows 19, and bending the distal region 14 of the jaw member 11 to form the edge flap 18. Furthermore, the three side-by-side second strip elements would be bent outwardly to extend at about 90° away from the first jaw members 11,11', and would be folded to form the three second jaw members 21, 21', with the central jaw member 21 in opposed relation to the two lateral second jaw members 21'. Again, the prongs 26 would be bent out of the plane of the cut-outs 29, and the distal or end regions 24 of the second jaw members 21, 21' would be bent to form the edge flaps 28.

The configuration of the fastener 100 of the invention and its method of manufacture from sheet material result in a straight-forward manufacturing method in which a relatively complex geometry can be simply generated by folding, cutting or stamping operations to produce an integral clip-type fastener formed from a single piece of sheet material.

Finally, it is to be understood that alterations and/or additions may be introduced to the particular construction and arrangement of parts described herein with reference to the embodiment shown in the accompanying drawings without departing from the spirit or scope of the present invention as defined in the accompanying claims.

## Claims

1. A fastener for securely connecting two articles together, the fastener comprising:
a first clip portion comprising at least a pair of opposing first jaw members adapted to receive and retain part of a first article there-between; and
a second clip portion comprising at least a pair of opposing second jaw members adapted to receive and retain part of a second article there-between;
wherein the second jaw members are integral with and extend outwardly from one of the first jaw members such that the first clip portion and the second clip portion are arranged at an angle to one another, and
wherein said second jaw members are laterally offset from one another.

2. A fastener according to claim 1, wherein said second clip portion has at least three jaw members, said at least three jaw members comprising a central jaw member and two lateral jaw members adapted to act in opposition to the central jaw member, said two lateral jaw members being arranged offset from the central jaw member to laterally opposite sides thereof.

3. A fastener according to claim 1 or claim 2, wherein each of said first jaw members is interconnected with the other at a base region thereof and extends to a distal region;
wherein each of said second jaw members is interconnected with the other at a base region thereof and extends to a distal region; and
wherein the second jaw members are integral with and extend outwardly from their respective base regions at the distal region of said one of the first jaw members.

4. A fastener according to any one of the preceding claims, wherein the first clip portion and the second clip portion are arranged at an angle to one another greater than 0° and less than 180°, preferably in the range of about 30° to about 150°, more preferably in the range of about 60° to about 120°, and most preferably about 90°.

5. A fastener according to any one of the preceding claims, wherein the direction for inserting the first article into the first clip portion and the direction for inserting the second article into the second clip portion subtend an angle greater than 0° and less than 180°, preferably in the range of about 30° to about 150°, more preferably in the range of about 60° to about 120°, and most preferably about 90°.

6. A fastener according to any one of the preceding claims, wherein the fastener is formed from sheet material, such as sheet metal, e.g. by cutting and bending or pressing.

7. A fastener according to any one of the preceding claims, wherein the opposing jaw members of each respective clip portion comprise elements of folded sheet material.

8. A fastener according to any one of the preceding claims, wherein the opposing jaw members of each respective clip portion are resiliently biased towards one another in such a way that insertion of the respective article requires the jaw members to resiliently yield away from one another.

9. A fastener according to any one of the preceding claims, wherein at least one of the first jaw members comprises at least one projection for engaging a corresponding recess or aperture in said part of the first article received within the first clip portion, said at least one projection being adapted to inhibit or prevent removal of the first article from the first clip portion.

10. A fastener according to claim 9, wherein said at least one projection is in the form of a prong or barb.

11. A fastener according to claim 9 or claim 10, wherein one of the first jaw members comprises two said projections for inhibiting or preventing removal of the first article from the first clip portion.

12. A fastener according to any one of the preceding claims, wherein at least one of the second jaw members comprises at least one projection for engaging a corresponding recess or aperture in said part of the second article received within the second clip portion, said at least one projection being adapted to inhibit or prevent removal of the second article from the second clip portion.

13. A fastener according to claim 12, wherein said at least one projection is in the form of a prong or barb.

14. A fastener according to claim 12 or claim 13, wherein the second jaw members comprise two said projections for inhibiting or preventing removal of the second article to from the second clip portion.

15. A fastener according to any one of the preceding claims, wherein the first and second clip portions are formed as channels having a generally U-shaped transverse cross-section.

16. A fastener according to any one of the preceding claims, wherein said parts of the first and second articles received within the first and second clip portions respectively are substantially planar.

17. A fastener according to claim 16, wherein the first and second articles are substantially planar, plate-like articles, and said parts of the first and second articles received within the respective first and second clip portions are edge regions of the substantially plate-like first and second articles.

18. A fastener according to any one of the preceding claims, wherein the distal region of at least one of the first and second jaw members includes an outwardly angled flap to assist insertion of the respective first or second article into the respective clip portion.

19. A method of manufacturing a fastener for connecting two articles, the method comprising the steps of:
cutting a fastener blank from a sheet of stock material, the blank having a first panel portion and at least two second strip elements extending from one side of the first panel portion;
folding the first panel portion over upon itself to form a pair of opposed first jaw members adapted to receive and retain part of a first article there-between;
folding the said second strip elements, which depend from a distal or edge region of one of the first jaw members, outwardly and away from the first jaw members such that said strip elements themselves form a pair of opposed second jaw members adapted to receive and retain part of a second article there-between.

20. A method according claim 19, further comprising the step of folding the sheet material of the first and second jaw members such that opposed jaw members are resiliently biased towards one another and such that insertion of the respective article there-between requires the opposed jaw members to resiliently yield away from one another.

21. A method according to claim 19 or 20, further comprising the step of folding the sheet material at a distal region of at least one of the first and second jaw members outwardly away from the respective opposing jaw member(s) to form an angled flap for assisting insertion of the first or second article there-between.

22. A method according to any one of claims 19 to 21, further comprising the step of forming one or more projections in at least one of the jaw members for engaging a corresponding recess or aperture in said part of the article respectively inserted there-between to inhibit or prevent removal of the article from the respective clip portion.

23. A method according to any one of claims 19 to 22, wherein the sheet material is a sheet metal, and the steps of folding and/or cutting the element of sheet metal comprise a series of cold-working operations.
